# EUROPÄISCHE PATENTANMELDUNG

(11) **EP 4 730 010 A1**
(43) Veröffentlichungstag der Anmeldung: **22.04.2026**
(21) Anmeldenummer: 24207325.2
(22) Anmeldetag: 17.10.2024
(51) Int. Cl.: G02B 26/08, G01S 17/00

(54) **LICHTTECHNISCHES MODUL UND LIDAR-SENSOR**

(71) Anmelder: Universität Kassel (Körperschaft d. öffentlichen Rechts), 34125 Kassel (DE)
(72) Erfinder: BÖRCSÖK, Josef, 68753 Waghäusel (DE); HILLMER, Hartmut, 34128 Kassel (DE); TELAWI, Samer, 34125 Kassel (DE); MICHEL, Jakob, 34134 Kassel (DE)
(74) Vertreter: Walther Bayer Faber Patentanwälte PartGmbB

(57) **Zusammenfassung**

Gegenstand der Erfindung ist ein lichttechnisches Modul (100), insbesondere Mikrospiegel-Modul, umfassend wenigstens zwei Mikroblattelemente (1), insbesondere Mikrospiegel, auf einem Grundkörper (2), wobei jedes Mikroblattelement (1) wenigstens die folgenden Abschnitte aufweist:
- einen Blattabschnitt (11) mit zwei im Wesentlichen planparallelen Oberflächen, wobei insbesondere wenigstens eine Oberfläche verspiegelt ist,
- einen randseitigen Befestigungsabschnitt (12), der starr auf dem Grundkörper (2) angeordnet ist, und
- einen dazwischenliegenden Scharnierabschnitt (13), der eigenspannungsinduziert krümmbar ausgebildet ist, derart, dass der Blattabschnitt (11) in ausgelenkte Stellungen schwenkbar ist,
wobei jedes Mikroblattelement (1) eine Elektrode aufweist oder bildet, und wobei jedem Mikroblattelement (1) wenigstens eine auf dem Grundkörper (2) angeordnete Elektrode (3) zugeordnet ist, derart, dass durch Anlegen einer elektrischen Spannung zwischen den einander zugeordneten Elektroden (1, 3) der Blattabschnitt (11) des zugehörigen Mikroblattelements (1) ausgehend von einer ausgelenkten Stellung in Richtung einer geschlossenen Stellung schwenkbar ist, in welcher der Blattabschnitt (11) im Wesentlichen planparallel zum Grundkörper (2) orientiert ist.

Erfindungsgemäß sind wenigstens je zwei Mikroblattelemente (1) miteinander mechanisch verbunden, derart, dass deren Blattabschnitte (11) miteinander gekoppelt schwenkbar sind.

## Beschreibung

Die Erfindung betrifft ein lichttechnisches Modul, insbesondere ein Mikrospiegel-Modul, und einen damit ausgestatteten Lidar-Sensor.

### STAND DER TECHNIK

Lichttechnische Module mit regelmäßigen Anordnungen von aktuierbaren Mikroelementen in Form von Mikrospiegeln oder Mikroshuttern zählen zu den mikro-opto-elektro-mechanischen Systemen (MOEMS) und werden zur hochaufgelösten, digitalen Lichtmodulation oder Lichtlenkung in einer Vielzahl von unterschiedlichen Anwendungen eingesetzt, etwa als Komponenten von Beamern (insbesondere die unter dem Markennamen Digital Light Processing bekannte Projektionstechnik von Texas Instruments Inc.), als Router oder Blenden, beispielsweise auf den Gebieten der optischen Informationsverarbeitung, der Projektionsanzeigen, der Mikroskopie, der Endoskopie, der Lithographie, der Laserstrukturierung oder auch als lichtleitende Elemente in Gebäudeverglasungen.

Die vorliegende Erfindung setzt an einem lichttechnischen Modul mit einem Array von Mikroblattelementen an, welches in den Druckschriften EP 4 102 024 A1 und Hillmer et al., Jpn. J. Appl. Phys. 57, 08PA07 (2018) offenbart ist. Die dort beschriebenen Mikroblattelemente weisen Blattabschnitte als lichtundurchlässige und insbesondere verspiegelte Flächenkörper auf, die mittels randseitiger Befestigungsabschnitte scharnierartig auf einem Grundkörper angeordnet sind, derart, dass jeder Blattabschnitt individuell zwischen einer geschlossenen Stellung, in welcher der Blattabschnitt im Wesentlichen planparallel zum Grundkörper orientiert ist, und wenigstens einer ausgelenkten Stellung schwenkbar ist. Dabei wird die Einnahme der (maximal) ausgelenkten Stellung durch die eigenspannungsinduzierte Krümmung eines Scharnierabschnitts hervorgerufen, der sich jeweils zwischen dem Befestigungs- und dem Blattabschnitt der Mikroblattelemente erstreckt. Das Verschwenken der Blattabschnitte in Richtung der geschlossenen Stellung basiert auf einem elektrostatischen Wirkprinzip. Dazu weist jedes Mikroblattelement eine Elektrode auf, und jedem Mikroblattelement ist eine auf dem Grundkörper angeordnete Elektrode zugeordnet, derart, dass durch Anlegen einer elektrischen Spannung zwischen den einander zugeordneten Elektroden eine elektrostatische Anziehungskraft auf den Blattabschnitt einwirkt, die groß genug ist, um den Blattabschnitt unter elastischer Verformung des Scharnierabschnitts in Richtung der geschlossenen Stellung zu schwenken. Nach Abschalten der elektrischen Spannung erfolgt eine eigenspannungsgetriebene Rückverformung des Scharnierabschnitts, wodurch der Blattabschnitt in die ausgelenkte Stellung zurückgeführt wird.

Einen besonderen Vorzug derartiger Mikroblattelemente stellt der große Schwenkbereich der Blattabschnitte dar, wobei zwischen der geschlossenen und der maximal ausgelenkten Stellung beispielsweise ein Winkelintervall von bis zu 120° überstrichen werden kann. Nachteilig sind hingegen die Unterschiede in den Schaltzeiten, die für das Verschwenken der Blattabschnitte in Richtung der geschlossenen bzw. der ausgelenkten Stellung benötigt werden. So erfolgt das elektrostatisch aktuierte Verschwenken in die geschlossene Stellung bei einem beispielhaften Mikroblattelement mit einem Blattabschnitt von 100 µm Kantenlänge und bei einer elektrischen Spannung bis 100 V binnen Schaltzeiten im Bereich von 1 µs bis 10 µs, wohingegen das eigenspannungsgetriebene Verschwenken von der geschlossenen in die ausgelenkte Stellung, nach Abschalten der elektrischen Spannung, typischerweise 1 ms bis 10 ms benötigt. Im Detail hängen die Schaltzeiten insbesondere von den Dimensionen, Werkstoffen und Fertigungsprozessen der Mikroblattelemente ab, die beschriebene Disparität ist jedoch ein inhärentes Merkmal derartiger lichttechnischer Module.

### OFFENBARUNG DER ERFINDUNG

Es ist die Aufgabe der vorliegenden Erfindung, eine Weiterbildung eines gattungsgemäßen lichttechnischen Moduls vorzuschlagen, dessen Mikroblattelemente durch im Wesentlichen identische Schaltzeiten beim bidirektionalen Verschwenken gekennzeichnet sind.

Diese Aufgabe wird gelöst von einem lichttechnischen Modul gemäß Anspruch 1. Eine Anwendung des erfindungsgemäßen Moduls in einem Lidar-Sensor offenbart Anspruch 11. Vorteilhafte Weiterbildungen der Erfindung sind in den abhängigen Ansprüchen angegeben.

Die Erfindung setzt an einem lichttechnischen Modul an, insbesondere einem Mikrospiegel-Modul, umfassend wenigstens zwei Mikroblattelemente, insbesondere Mikrospiegel, auf einem Grundkörper, wobei jedes Mikroblattelement wenigstens die folgenden Abschnitte aufweist:
- einen Blattabschnitt mit zwei im Wesentlichen planparallelen Oberflächen, wobei insbesondere wenigstens eine Oberfläche verspiegelt ist,
- einen randseitigen Befestigungsabschnitt, der starr auf dem Grundkörper angeordnet ist, und
- einen dazwischenliegenden Scharnierabschnitt, der eigenspannungsinduziert krümmbar ausgebildet ist, derart, dass der Blattabschnitt in ausgelenkte Stellungen schwenkbar ist,
wobei jedes Mikroblattelement eine Elektrode aufweist oder bildet, und wobei jedem Mikroblattelement wenigstens eine auf dem Grundkörper angeordnete Elektrode zugeordnet ist, derart, dass durch Anlegen einer elektrischen Spannung zwischen den einander zugeordneten Elektroden der Blattabschnitt des zugehörigen Mikroblattelements ausgehend von einer ausgelenkten Stellung in Richtung einer geschlossenen Stellung schwenkbar ist, in welcher der Blattabschnitt im Wesentlichen planparallel zum Grundkörper orientiert ist. Erfindungsgemäß sind wenigstens je zwei Mikroblattelemente miteinander mechanisch verbunden, derart, dass deren Blattabschnitte miteinander gekoppelt schwenkbar sind.

Der Grundgedanke der Erfindung besteht darin, jedes Mikroblattelement derart mit einem zweiten Mikroblattelement zu verbinden, dass jedes Verschwenken der Blattabschnitte durch elektrostatische Aktuierung angetrieben wird, und zwar unabhängig davon, ob das Verschwenken in Richtung der geschlossenen oder der ausgelenkten Stellungen erfolgt. Insbesondere ist vorgesehen, dass die miteinander mechanisch verbundenen Mikroblattelemente zueinander gegensinnig orientiert sind, derart, dass beim Schwenken des einen Blattabschnitts in Richtung der geschlossenen Stellung ein Schwenken des gekoppelten Blattabschnitts in eine weiter ausgelenkte Stellung erfolgt. Jedes Mikroblattelement wird dabei durch eine elektrische Spannung an der eigenen Elektrode in Richtung der geschlossenen Stellung getrieben, und das Verschwenken in Richtung der ausgelenkten Stellung wird mittelbar durch die elektrostatische Aktuierung des damit mechanisch verbundenen Mikroblattelements in Richtung dessen geschlossener Stellung bewirkt. Aufgrund der mechanischen Kopplung der Blattabschnitte erfolgt das Verschwenken also stets im insbesondere paarweisen Verbund, d.h., dass bei der elektrostatischen Aktuierung des einen Mikroblattelements der Blattabschnitt des anderen Mikroblattelements im Wesentlichen simultan mitgeschwenkt wird. Unabhängig von der Schwenkrichtung (Schließen oder stärker Auslenken) wird die Dynamik des Verschwenkens daher durch die kurzen Schaltzeiten bei der elektrostatischen Aktuierung dominiert, die typischerweise im Bereich von 1 µs bis 10 µs liegen. Das wesentlich langsamere Verschwenken der Blattabschnitte in Richtung der maximal ausgelenkten Stellung aufgrund der mechanischen Eigenspannungen in den Scharnierabschnitten wird durch den schnellen elektrostatischen Prozess überlagert. Dadurch ist die Dynamik des Verschwenkens in beide Richtungen durch dieselben Zeitkonstanten bestimmt.

Jedes Mikroblattelement kann eine lichttechnische Funktion aufweisen, insbesondere als ein Mikrospiegel fungieren. Alternativ kann nur eines der paarweise mechanisch miteinander verbundenen Mikroblattelemente für eine lichttechnische Funktion vorgesehen sein und das andere Mikroblattelement dient lediglich als zugeordnetes Antriebsmittel für das Verschwenken.

Die Blattabschnitte der miteinander mechanisch verbundenen Mikroblattelemente schließen miteinander vorzugsweise einen Öffnungswinkel im Bereich von 30° bis 150°, insbesondere von 80° bis 100°, ein. Der Öffnungswinkel wird insbesondere durch die Krümmung des Scharnierabschnitts sowie die detaillierte Ausführung der mechanischen Kopplung der Mikroblattelemente bestimmt. Weiterhin weisen die Blattabschnitte zwischen der geschlossenen Stellung und einer maximal ausgelenkten Stellung jeweils beispielsweise ein Schwenkwinkelintervall im Bereich von 30° bis 120°, insbesondere von 80° bis 100°, auf.

Beispielsweise ist eine mechanische Verbindung zwischen zwei Mikroblattelementen mittels wenigstens eines Koppelarms gebildet, vorzugsweise mittels eines Koppelarms, der bei paarweise gegenüberliegender Anordnung der Mikroblattelemente mittig zwischen den beiden Mikroblattelementen angeordnet ist. Der Koppelarm ist beispielsweise als ein bogenförmiger Arm ausgebildet, der eine mechanische Verbindung zwischen den beiden Blattabschnitten der Mikroblattelemente bildet und diese miteinander koppelt. Beim Verschwenken der Blattabschnitte durch elektrostatische Aktuierung eines der beiden gekoppelten Mikroblattelemente erfährt der Koppelarm typischerweise eine elastische Verformung, sodass der Öffnungswinkel zwischen den beiden Blattabschnitten während des dynamischen Schaltvorgangs nicht konstant ist. Nach Beendigung der Schwenkbewegung erfolgt eine elastische Rückverformung des Koppelarms in die Gleichgewichtsform.

In einer weiteren Ausführungsform ist die mechanische Verbindung zwischen zwei gegenüberliegenden Mikroblattelementen mittels zwei gleichartigen Koppelarmen gebildet, die spiegelsymmetrisch zu einer gemeinsamen Schwenkebene der beiden Mikroblattelemente angeordnet sind. Die Schwenkachsen der beiden Mikroblattelemente sind parallel zueinander und orthogonal zu der gemeinsamen Schwenkebene orientiert.

Alternativ kann die mechanische Verbindung zwischen zwei Mikroblattelementen mittels zwei unterschiedlich ausgebildeten Koppelarmen gebildet sein. Dabei können die Unterschiede beispielsweise in den Abmessungen, insbesondere der Breite, der Koppelarme oder in deren detailliertem Eigenspannungszustand liegen, sodass die Koppelarme unterschiedliche Kopplungsstärken vermitteln. In einer solchen Ausführungsform können somit Torsionsmomente auf die miteinander verbundenen Mikroblattelemente wirken, die dynamische und/oder statische Verkippungen oder Verformungen beispielsweise der Blattabschnitte bedingen können.

In vorteilhafter Ausführungsform weist der wenigstens eine Koppelarm zwei Endabschnitte und einen dazwischenliegenden Mittenabschnitt auf, wobei die Endabschnitte endseitig mit den zugehörigen Mikroblattelementen verbunden sind, und wobei der Mittenabschnitt einen Eigenspannungsgradienten aufweist, derart, dass eine dem Grundkörper zugewandte Unterseite zugverspannt ist, wobei eine vom Grundkörper abgewandte Oberseite wenigstens abschnittsweise druckverspannt ist. Insbesondere weist der wenigstens eine Koppelarm dazu einen Schichtaufbau auf, wobei die Oberseite des Mittenabschnitts wenigstens abschnittsweise durch eine druckverspannte Schicht gebildet ist. Die detaillierte Ausgestaltung dieser druckverspannten Schicht, etwa hinsichtlich der Schichtdicke sowie der Form und Größe ihrer flächigen Erstreckung, kann herstellungsseitig zur zweckmäßigen Ausbildung der mechanischen Eigenschaften des Koppelarms genutzt werden. Beispielsweise kann die druckverspannte Schicht einen etwa rautenförmigen Bereich der Oberseite des Mittenabschnitts einnehmen. Aufgrund der lokal unterschiedlichen Eigenspannungen kann der Koppelarm eine "Doppel-S"-förmig gebogene Gestalt aufweisen, wodurch eine elastische Verformung begünstigt wird. Bei Aktuierung der zugehörigen Mikroblattelemente resultiert daraus eine zweckmäßige Federwirkung, die eine fließende Schwenkbewegung der Blattabschnitte fördert.

In einer weiteren Ausführungsform des lichttechnischen Moduls weisen die auf dem Grundkörper angeordneten Elektroden jeweils zwei voneinander elektrisch isolierte und individuell ansteuerbare Elektrodensegmente auf, wobei die Elektrodensegmente spiegelsymmetrisch zu einer Schwenkebene des jeweils zugeordneten Mikroblattelements angeordnet sind, derart, dass durch Anlegen einer elektrischen Spannung zwischen einem Elektrodensegment und der Elektrode des zugeordneten Mikroblattelements das Mikroblattelement tordierbar ist. Die Schwenkebene ist orthogonal zur Schwenkachse des Mikroblattelements orientiert. Die Tordierung des Mikroblattelements ist vorzugsweise auf den Scharnierabschnitt und/oder einen vom Scharnierabschnitt in den Blattabschnitt überleitenden Torsionsabschnitt beschränkt, wobei der Blattabschnitt im Wesentlichen unverformt bleibt und lediglich eine Verkippung erfährt. Ein derartiges Verkippen stellt neben dem Verschwenken einen weiteren Freiheitsgrad zur gezielten Lichtmanipulation mittels des Mikroblattelements dar. Je nach konkreter Anordnung des Koppelarms ist die Verkippung der Blattabschnitte von miteinander mechanisch verbundenen Mikroblattelementen ebenfalls miteinander gekoppelt.

Die Blattabschnitte der Mikroblattelemente weisen zwischen der geschlossenen Stellung und der maximal ausgelenkten Stellung jeweils ein Schwenkwinkelintervall von bis zu 120° auf. Das Verkippen der Blattabschnitte durch Tordierung des Mikroblattelements erfolgt beispielsweise um bis zu 30°, etwa im Bereich von 5° bis 30°. Die Kantenlängen der Blattabschnitte können vorzugsweise aus einem Bereich zwischen wenigen Mikrometern und einigen Millimetern gewählt werden, beispielsweise zwischen 10 µm und 10 mm. Die Schaltzeiten beim Wechsel der Stellungen der Blattabschnitte liegen in der Größenordnung von lediglich 1 - 100 Mikrosekunden (je nach Bauform), wobei die Schaltzeiten aufgrund der erfindungsgemäßen mechanischen Kopplung von der Schwenkrichtung unabhängig sind.

Zur Herstellung des lichttechnischen Moduls können gängige Dünnschichtverfahren angewandt werden, insbesondere unter Einsatz von Depositionsprozessen, Lithographie- und Ätzschritten sowie von Opferschichttechniken. Detaillierte Angaben zur Fertigung einer regelmäßigen Anordnung von Mikroblattelementen mit Spiegelwirkung finden sich beispielsweise in Hillmer et al., Jpn. J. Appl. Phys. 57, 08PA07 (2018). Die Mikroblattelemente sind vorzugsweise als Dünnschichtverbünde ausgebildet, wodurch die mechanischen Eigenspannungen abschnittsweise dediziert einstellbar sind. Beispielsweise weist jedes Mikroblattelement eine auf dem Grundkörper angeordnete druckverspannte Schicht auf, sowie eine zugverspannte Schicht. Die Wirkung dieser Kombination besteht in der beabsichtigten Krümmung des Mikroblattelements entlang des Scharnierabschnitts, insbesondere um einen Aufrollwinkel von bis zu 120°. Entlang des Befestigungsabschnitts wird eine Krümmung durch die stoffschlüssige Verbindung zum Grundkörper verhindert, und der Blattabschnitt umfasst zusätzlich eine zugverspannte Kompensationsschicht, die derart ausgebildet ist, dass die Wechselwirkung aller effektiv wirksamen Eigenspannungen zu einer Planarisierung des Blattabschnitts führt und dort somit keine Krümmung auftritt. Der Dünnschichtverbund kann metallische Werkstoffe aufweisen, wodurch die Elektrode des Mikroblattelements gebildet ist. Der Dünnschichtverbund kann insbesondere im Blattabschnitt weitere Schichten zur Ausbildung der gewünschten lichttechnischen Funktion des Mikroblattelements aufweisen, beispielsweise eine Spiegelschicht oder eine Anti-Reflex-Schicht.

Das erfindungsgemäße lichttechnische Modul kann eine Vielzahl von Mikroblattelementen aufweisen, insbesondere in einer matrixförmigen Anordnung. Zur individuellen Steuerung kann ein Adressierungsnetzwerk aus planaren Leitungen auf dem Grundkörper vorgesehen sein, wodurch die diversen Elektroden mit einer zentralen Schnittstelle zur computergesteuerten Adressierung und Aktuierung der Mikroblattelemente elektrisch einzeln verbunden sind. Alternativ kann eine direkte Adressierung vorgesehen sein, bei der die Ansteuerelektronik unmittelbar unter den Mikroblattelementen angeordnet ist.

Die Erfindung betrifft zudem einen Lidar-Sensor wenigstens umfassend:
- ein erfindungsgemäßes lichttechnisches Modul nach einer der vorgenannten Ausführungsformen, wobei das lichttechnische Modul wenigstens zwei miteinander mechanisch verbundene Mikroblattelemente umfasst, deren Blattabschnitte verspiegelte Oberflächen aufweisen, derart, dass die Mikroblattelemente Mikrospiegel bilden,
- wenigstens zwei Laserlichtquellen, wobei jedem Mikroblattelement eine Laserlichtquelle zugeordnet ist, derart, dass der jeweilige Blattabschnitt mittels der zugeordneten Laserlichtquelle beleuchtbar ist,
- wenigstens eine Detektions- und Auswerteeinrichtung für in der Betriebsumgebung des Lidar-Sensors reflektiertes Laserlicht, und
- eine Steuereinrichtung zur Steuerung des lichttechnischen Moduls und der Laserlichtquellen.

Der Lidar-Sensor (Light Detection and Ranging) dient der elektro-optischen Fernerkundung, insbesondere um die Entfernung und Relativgeschwindigkeit zu Objekten der Betriebsumgebung zu bestimmen. Der Lidar-Sensor basiert auf der Emission von Laserlicht in die Betriebsumgebung und dessen Detektion nach Reflektion, wobei insbesondere mittels Bestimmung der Laufzeit oder der Phasenlage des detektierten Laserlichts der Abstand zum reflektierenden Objekt ermittelt werden kann. Der Lidar-Sensor verwendet das erfindungsgemäße lichttechnische Modul, um das Laserlicht zielgerichtet in die zu erfassende Betriebsumgebung zu spiegeln, insbesondere erfolgt dabei ein derartiges Verschwenken der verspiegelten Blattabschnitte der Mikroblattelemente, dass ein möglichst großes Sichtfeld mit einer zweckmäßigen Zeitauflösung gescannt wird. Aufgrund der Kopplung der Mikroblattelemente über deren mechanische Verbindung werden stets mindestens zwei Sektoren der Betriebsumgebung simultan erfasst.

Beispielsweise schließen die Blattabschnitte der miteinander mechanisch verbundenen Mikroblattelemente miteinander einen Öffnungswinkel von 90° ein und weisen zwischen der geschlossenen Stellung und einer maximal ausgelenkten Stellung jeweils ein Schwenkwinkelintervall von 90° auf, wobei die jeweils miteinander mechanisch verbundenen Mikroblattelemente zueinander gegensinnig orientiert sind, sodass mittels jedes Paares miteinander mechanisch verbundener Mikroblattelemente ein ebenes Scanwinkelintervall von 270° adressierbar ist. Scanwinkelintervalle sowohl in horizontaler als auch in vertikaler Richtung sind durch Ausbildung des lichttechnischen Moduls mit tordierbaren Mikroblattelementen adressierbar.

In einer weiteren Ausführungsform umfasst das lichttechnische Modul mehrere Paare von miteinander mechanisch verbundenen Mikroblattelementen und eine der Anzahl an Mikroblattelementen entsprechende Anzahl an Laserlichtquellen. Die Anzahl, Anordnung und Orientierung der Mikroblattelemente kann beispielsweise zur Überwachung eines möglichst weiten Sichtfeldes unter hoher Zeitauflösung optimiert sein. Alternativ kann die Anzahl an Laserlichtquellen reduziert werden und insbesondere mittels Strahlteilern eine Aufspaltung des Laserlichts in Teilstrahlen vorgenommen werden, die zweckmäßig zur Beleuchtung mehrerer Mikroblattelemente umgelenkt werden.

### AUSFÜHRUNGSBEISPIELE DER ERFINDUNG

Weitere, die Erfindung verbessernde Maßnahmen werden nachstehend gemeinsam mit der Beschreibung von Ausführungsbeispielen der Erfindung anhand der Figuren näher dargestellt. Es zeigt in schematischer Form:
- Fig. 1:: ein erstes Ausführungsbeispiel eines erfindungsgemäßen lichttechnischen Moduls,
- Fig. 2a-d:: ein zweites Ausführungsbeispiel,
- Fig. 3:: eine Schnittansicht eines Koppelarms,
- Fig. 4:: ein drittes Ausführungsbeispiel
- Fig. 5:: ein viertes Ausführungsbeispiel,
- Fig. 6a-c:: ein fünftes Ausführungsbeispiel,
- Fig. 7:: ein sechstes Ausführungsbeispiel,
- Fig. 8a-d:: ein siebtes Ausführungsbeispiel,
- Fig. 9a-d:: ein achtes Ausführungsbeispiel,
- Fig. 10a:: einen erfindungsgemäßen Lidar-Sensor,
- Fig. 10b,c:: Detailansichten zur Fig. 10a, und
- Fig. 11 a,b:: Scanwinkelintervalle von erfindungsgemäßen Lidar-Sensoren.

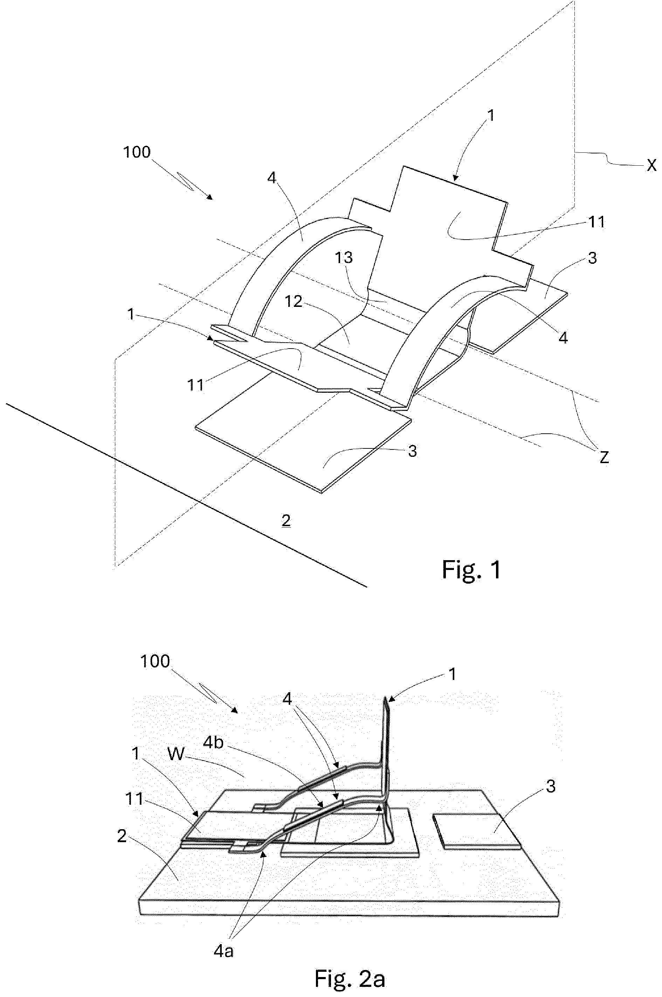

Fig. 1 zeigt eine schematische Darstellung eines Ausschnitts eines ersten Ausführungsbeispiels des erfindungsgemäßen lichttechnischen Moduls 100 umfassend die zwei mechanisch miteinander verbundenen Mikroblattelemente 1 auf dem Grundkörper 2, die einander gegenüberliegend angeordnet sind. Die mechanische Verbindung ist mittels der beiden Koppelarme 4 gebildet, die jeweils randseitig mit den beiden Blattabschnitten 11 verbunden sind.

Die Mikroblattelemente 1 weisen jeweils den Blattabschnitt 11 mit zwei im Wesentlichen planparallelen Oberflächen auf, den randseitigen Befestigungsabschnitt 12, der starr auf dem Grundkörper 2 angeordnet ist, und den dazwischenliegenden Scharnierabschnitt 13, der eigenspannungsinduziert krümmbar ausgebildet ist, derart, dass der Blattabschnitt 11 um die Schwenkachse Z in ausgelenkte Stellungen schwenkbar ist, wobei vorliegend beide Blattabschnitte 11 in ausgelenkten Stellungen dargestellt sind. Die Schwenkachsen Z der beiden Mikroblattelemente 1 sind beispielhaft parallel zueinander orientiert. Die Mikroblattelemente 1 umfassen metallische Werkstoffe und bilden somit Elektroden, und den Mikroblattelementen 1 ist jeweils eine der auf dem Grundkörper 2 angeordneten Elektroden 3 zugeordnet, derart, dass durch Anlegen einer elektrischen Spannung zwischen einer Elektrode 3 und dem zugehörigen Mikroblattelement 1 der jeweilige Blattabschnitt aufgrund von elektrostatischer Anziehung ausgehend von einer ausgelenkten Stellung in Richtung einer geschlossenen Stellung schwenkbar ist, in welcher der Blattabschnitt 11 im Wesentlichen planparallel zum Grundkörper 2 orientiert ist, d.h., nahezu an der Elektrode 3 anliegt.

Erfindungsgemäß sind die zwei Mikroblattelemente 1 miteinander mechanisch verbunden, derart, dass die Blattabschnitte 11 miteinander gekoppelt schwenkbar sind. Die mechanische Verbindung ist mittels der zwei Koppelarme 4 gebildet, die spiegelsymmetrisch zu der gemeinsamen Schwenkebene X der Mikroblattelemente 1 angeordnet sind. Die Schwenkebene X ist orthogonal zu den Schwenkachsen Z orientiert. Die miteinander mechanisch verbundenen Mikroblattelemente 1 sind zueinander gegensinnig orientiert, derart, dass beim Schwenken des einen Blattabschnitts 11 in Richtung der geschlossenen Stellung ein Schwenken des gekoppelten Blattabschnitts 11 in eine weiter ausgelenkte Stellung erfolgt. Während der Aktuierung eines der Mikroblattelemente 1 durch Anlegen einer elektrischen Spannung an die zugehörige Elektrode 3 wird das mechanisch verbundene Mikroblattelement 1 typischerweise nicht aktiv durch Anlegen einer elektrischen Spannung aktuiert, sondern rein mittels der Koppelarme 4 mitgeführt. Dadurch werden die Blattabschnitte 11 simultan geschwenkt, d.h., dass der aktiv aktuierte Blattabschnitt 11 in Richtung der geschlossenen Stellung und der passiv mitgeführte Blattabschnitt 11 in Richtung einer weiter ausgelenkten Stellung verbracht werden.

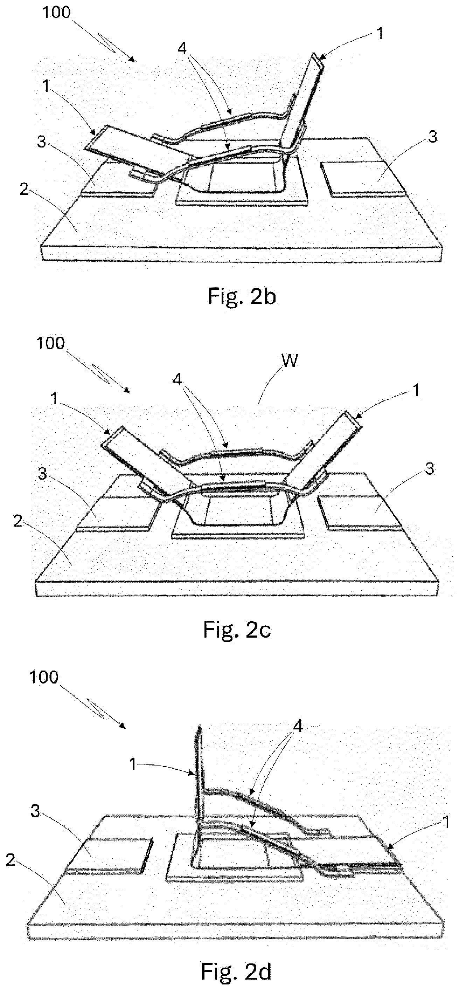

Fig. 2a - d zeigen schematische Darstellungen eines Ausschnitts eines zweiten Ausführungsbeispiels des erfindungsgemäßen lichttechnischen Moduls 100 bei unterschiedlichen Stellungen der Blattabschnitte 11. In sämtlichen Stellungen schließen die Blattabschnitte 11 miteinander einen Öffnungswinkel W von 90° ein. In Fig. 2a befindet sich der Blattabschnitt 11 des linken Mikroblattelements 1 in der geschlossenen Stellung, in welcher der Blattabschnitt 11 im Wesentlichen planparallel zum Grundkörper 2 orientiert ist, und der Blattabschnitt 11 des rechten Mikroblattelements 1 steht in einer beispielhaft um 90° maximal ausgelenkten Stellung. Durch Anlegen einer elektrischen Spannung zwischen der rechten Elektrode 3 und der Elektrode des rechten Mikroblattelements 1, die den Blattabschnitt 11 umfasst, wirkt eine elektrostatische Kraft, die den rechten Blattabschnitt 11 in Richtung dessen geschlossener Stellung treibt. Über die Koppelarme 4 wirkt die Kraft mittelbar auch auf den linken Blattabschnitt 11, sodass beide Blattabschnitte 11 simultan durch unterschiedliche Stellungen geschwenkt werden, wie in Fig. 2b und Fig. 2c beispielhaft dargestellt. Fig. 2d zeigt den Blattabschnitt 11 des rechten Mikroblattelements 1 in der geschlossenen Stellung, wobei sich der Blattabschnitt 11 des linken Mikroblattelements 1 in der maximal ausgelenkten Stellung befindet.

Beim zweiten Ausführungsbeispiel weisen die Koppelarme 4 je zwei Endabschnitte 4a und den dazwischenliegenden Mittenabschnitt 4b auf, wobei die Endabschnitte 4a endseitig mit den Blattabschnitten 11 verbunden sind, und wobei die Koppelarme 4 abschnittsweise unterschiedliche mechanische Eigenspannungen aufweist. Wie in Fig. 2a - d angedeutet, können solche inhomogenen Spannungszustände durch abschnittsweise unterschiedliche Dünnschichtverbünde erzeugt werden. Die Eigenspannungen manifestieren sich in unterschiedlichen Krümmungen der Endabschnitte 4a bzw. des Mittenabschnitts 4b, wodurch die Koppelarme 4 insgesamt eine etwa "Doppel-S"-förmige Gestalt aufweisen.

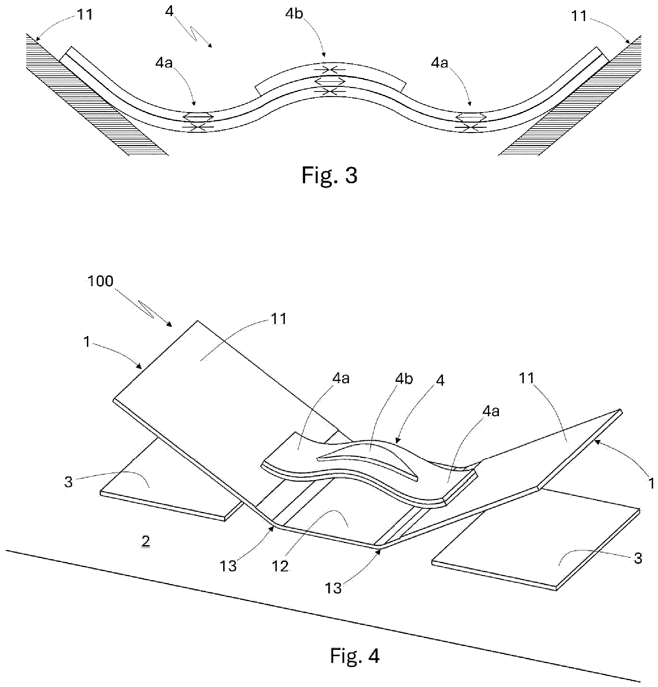

Eine detailliertere Darstellung eines derartigen Koppelarms 4 mit Eigenspannungsgradienten zeigt Fig. 3. Der Koppelarm 4 weist einen Schichtaufbau auf, der im Bereich der Endabschnitte 4a zwei Schichten und im Bereich des Mittenabschnitts 4b drei Schichten umfasst. Die in den Schichten jeweils vorherrschenden Eigenspannungen sind mittels der Pfeilpaare charakterisiert. Die in der Fig. 3 unterste Schicht, die die dem Grundkörper des lichttechnischen Moduls zugewandte Unterseite bildet, ist zugverspannt und die direkt darauf angeordnete Schicht ist druckverspannt. Daraus ergibt sich in den Endabschnitten 4a die dargestellte positive Krümmung des Koppelarms 4, wobei die Endabschnitte 4a endseitig mit den Blattabschnitten starr verbunden sind. Im Bereich des Mittenabschnitts 4b ist eine zusätzliche druckverspannte Schicht aufgebracht, die die vom Grundkörper abgewandte Oberseite bildet. Diese zusätzliche Schicht ergibt in der Wechselwirkung mit den weiteren Schichten die dargestellte negative Krümmung des Koppelarms 4 im Bereich des Mittenabschnitts 4b. Das Ausmaß der negativen Krümmung kann durch Variation der druckverspannten Schicht an der Oberseite zweckmäßig festgelegt werden, beispielsweise durch die Schichtdicke, die Schichtbreite in der flächigen Erstreckung, den Werkstoff, den Herstellungsprozess, etc. Damit gelingt eine Festlegung der effektiven Federkonstanten des Koppelarms 4, was die Dynamik der mechanischen Kopplung beim Verschwenken der Blattabschnitte 11 beeinflusst.

Fig. 4 zeigt eine schematische Darstellung eines Ausschnitts eines dritten Ausführungsbeispiels des erfindungsgemäßen lichttechnischen Moduls 100. Die mechanisch verbundenen Mikroblattelemente 1 sind paarweise gegenüberliegend angeordnet, wobei die Verbindung mittels des einen Koppelarms 4 realisiert ist, der mittig zwischen den beiden Mikroblattelementen angeordnet ist. In diesem Ausführungsbeispiel sind die Blattabschnitte 11, die insbesondere für eine Funktion als Mikrospiegel verspiegelt ausgebildet sein können, nur zu einem besonders geringen Maße durch den Koppelarm 4 abgeschattet, d.h., dass Licht aus einem weiten Raumwinkelsegment ungehindert auf die Blattabschnitte 11 einstrahlen kann bzw. ungehindert in ein weites Raumwinkelsegment reflektiert werden kann. Der Koppelarm 4 weist auf der Oberseite des Mittenabschnitts 4b eine druckverspannte Schicht auf, die einen etwa rautenförmigen Bereich der Oberseite einnimmt.

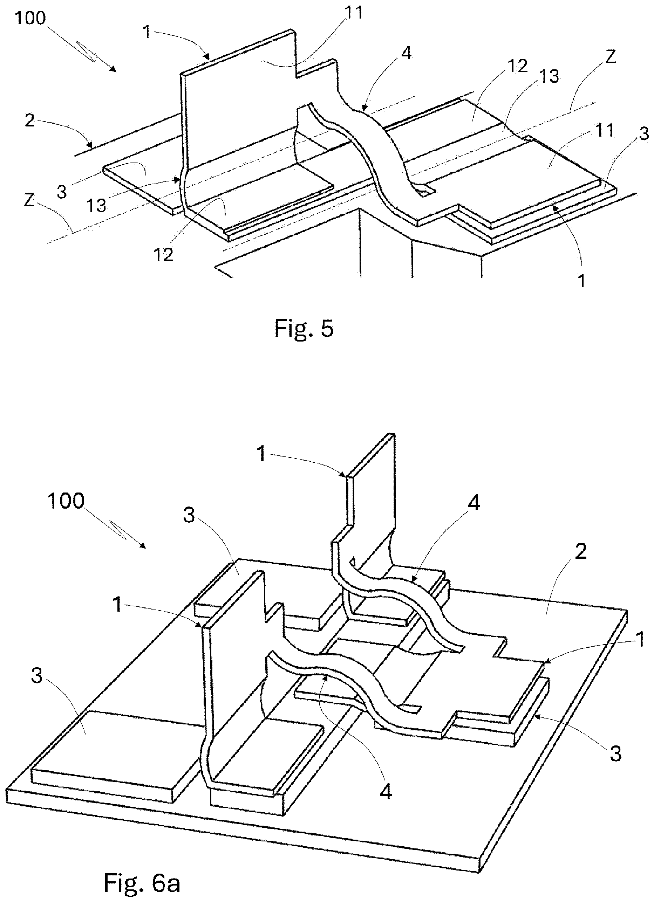

Fig. 5 zeigt eine schematische Darstellung eines Ausschnitts eines vierten Ausführungsbeispiels des erfindungsgemäßen lichttechnischen Moduls 100. Die mechanische Verbindung zur Kopplung des Verschwenkens der Blattabschnitte 11 der beiden Mikroblattelemente 1 ist hier nur mittels des einen Koppelarms 4 ausgebildet. Die beiden Mikroblattelemente 1 sind zueinander gegensinnig orientiert, im Unterschied zu den vorstehenden Ausführungsbeispielen allerdings entlang ihrer parallelen Schwenkachsen Z seitlich zueinander versetzt angeordnet.

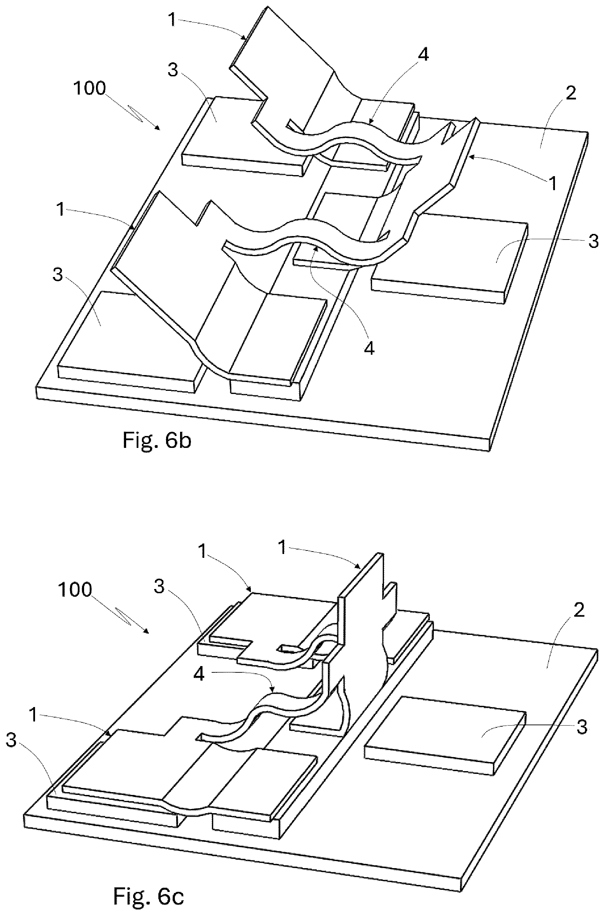

Fig. 6a - c zeigen schematische Darstellungen eines Ausschnitts eines fünften Ausführungsbeispiels des erfindungsgemäßen lichttechnischen Moduls 100 umfassend drei Mikroblattelemente 1, die in einer Reihe nebeneinander auf dem Grundkörper 2 angeordnet sind. Der Blattabschnitt 11 des mittleren Mikroblattelements 1 ist mittels je einem Koppelarm 4 mit den Blattabschnitten 11 der beiden äußeren Mikroblattelemente 1 mechanisch verbunden.

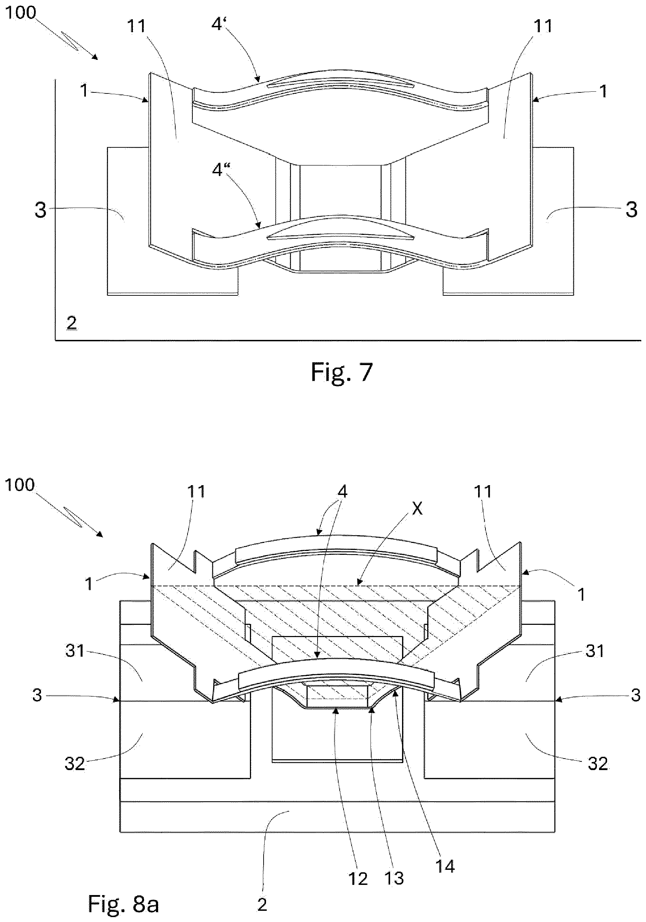

Fig. 7 zeigt eine schematische Darstellung eines Ausschnitts eines sechsten Ausführungsbeispiels des erfindungsgemäßen lichttechnischen Moduls 100, wobei die mechanische Verbindung zwischen den zwei Mikroblattelementen 1 mittels zwei unterschiedlich ausgebildeten Koppelarmen 4', 4" gebildet ist. Beide Koppelarme 4', 4" weisen einen gleichartigen Schichtaufbau auf, unterscheiden sich voneinander jedoch hinsichtlich ihrer Breite, wobei der Koppelarm 4' eine geringere Breite als der Koppelarm 4" aufweist. Aufgrund ihrer unterschiedlichen Dimensionen üben die Koppelarme 4', 4" auch unterschiedliche Kopplungsstärken auf die beiden Mikroblattelemente 1 aus, sodass beim Verschwenken der Blattabschnitte 11 mittels elektrostatischer Aktuierung eine dynamische Torsion der Mikroblattelemente 1 auftreten kann. Weiterhin können die Unterschiede in den Kopplungsstärken zu einer statischen Verkippung der Blattabschnitte 11 aus der Schwenkebene führen.

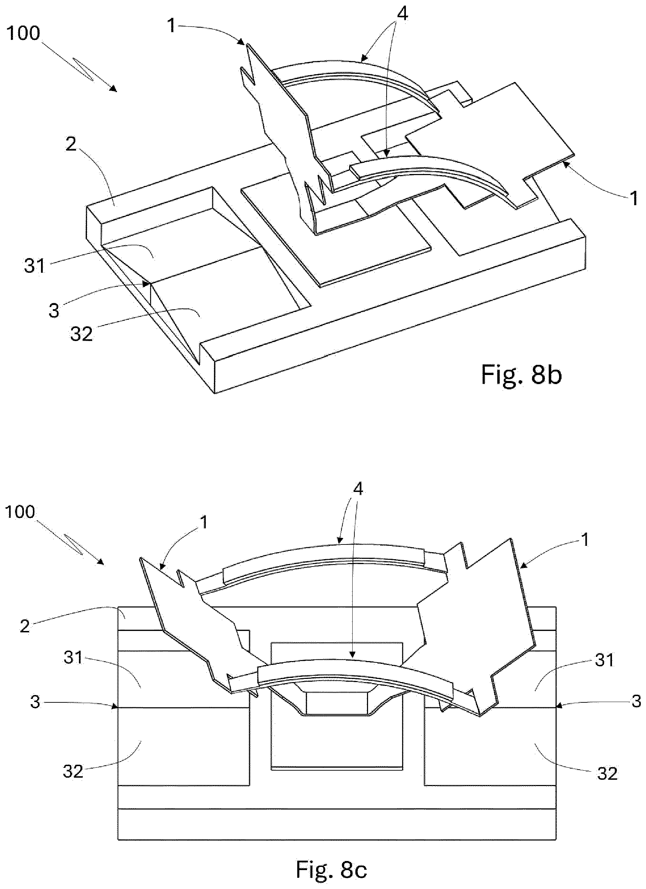

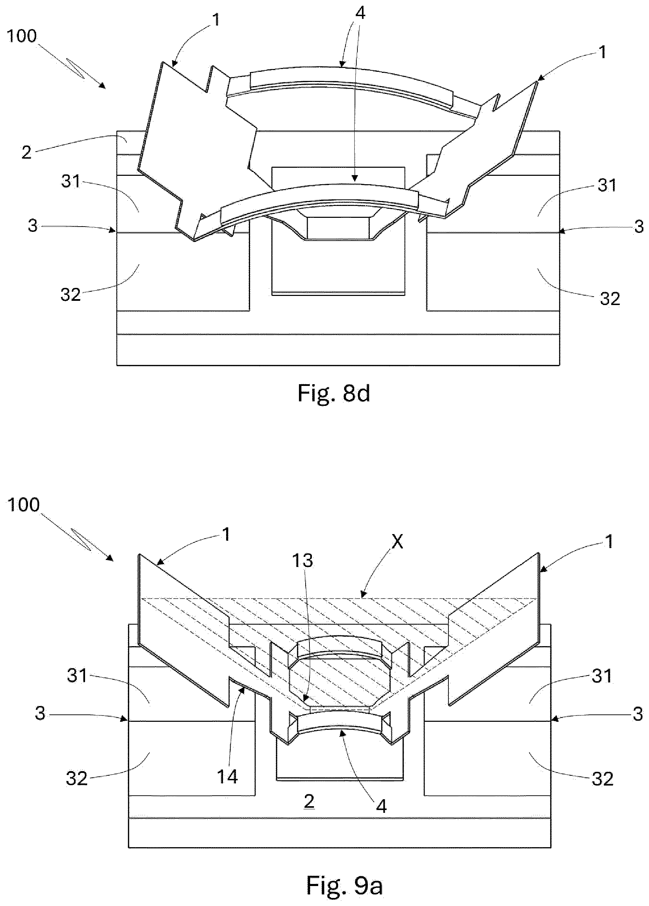

Fig. 8a - d zeigen schematische Darstellungen eines Ausschnitts eines siebten Ausführungsbeispiels des erfindungsgemäßen lichttechnischen Moduls 100, wobei die auf dem Grundkörper 2 angeordneten Elektroden 3 jeweils zwei voneinander elektrisch isolierte und individuell ansteuerbare Elektrodensegmente 31, 32 aufweisen, wobei die Elektrodensegmente 31, 32 spiegelsymmetrisch zur Schwenkebene X angeordnet sind, derart, dass durch Anlegen einer elektrischen Spannung zwischen einem der Elektrodensegmente 31, 32 und der Elektrode des zugeordneten Mikroblattelements 1 das Mikroblattelement 1 tordierbar ist. Die Torsion ist dabei im Wesentlichen auf die Torsionsabschnitte 14 beschränkt, die von den Scharnierabschnitten 13 in die Blattabschnitte 11 überleiten. Insbesondere werden die Blattabschnitte 11 nicht tordiert oder verbogen, sondern lediglich formstabil verkippt. Tordierte Zustände sind in Fig. 8c und Fig. 8d dargestellt, in denen eine elektrostatische Kraft zwischen je einem der Elektrodensegmente 31, 32 und einem der Blattabschnitte 11 wirkt und zu der dargestellten Torsion der Torsionsabschnitte 14 und Verkippung der Blattabschnitte 11 führt. Zur Verstärkung der Torsionswirkung weisen die Elektrodensegmente 31, 32 die dargestellte Neigung auf. Aufgrund der mechanischen Verbindung der Blattabschnitte 11 durch die Koppelarme 4 sind neben dem Verschwenken auch die Torsionsbewegungen der beiden Mikroblattelemente 1 miteinander gekoppelt. Bei simultaner Erregung der beiden Elektrodensegmente 31, 32 einer Elektrode 3 mit derselben elektrischen Spannung erfolgt keine Torsion der Mikroblattelemente 11, sondern lediglich das bereits beschriebene Verschwenken, wie in Fig. 8a und Fig. 8b dargestellt.

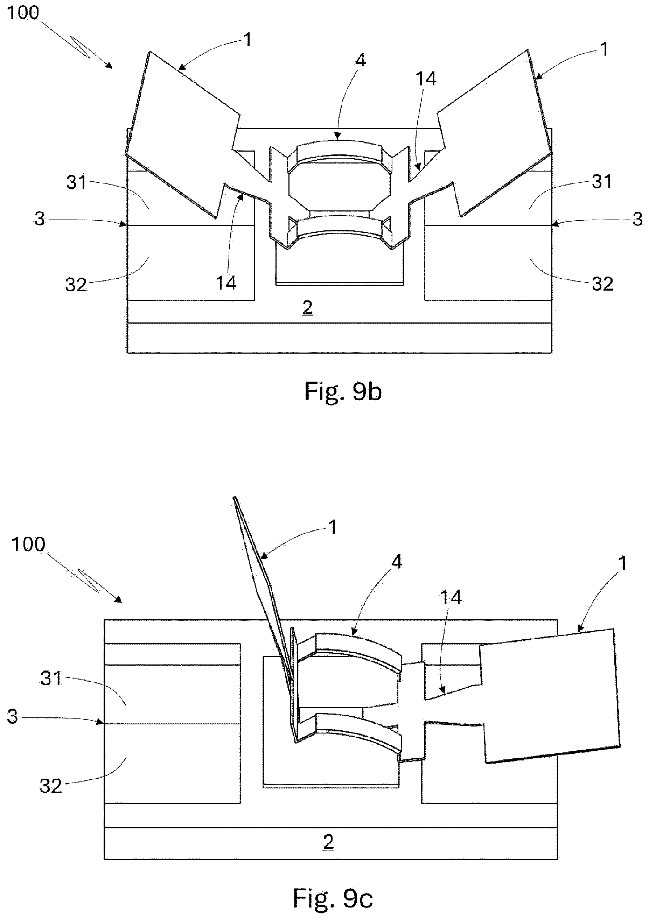

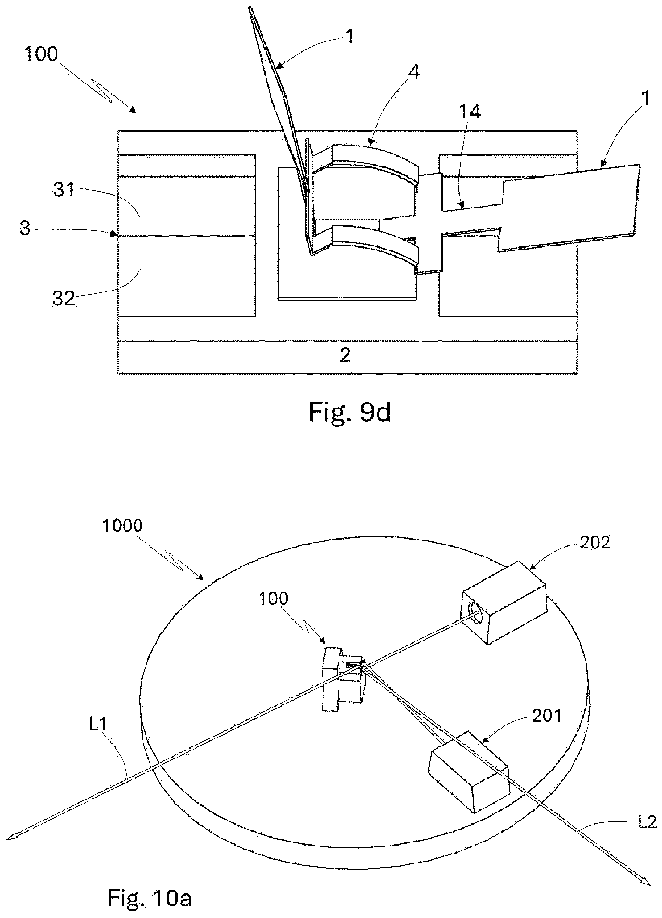

Fig. 9a - d zeigen schematische Darstellungen eines Ausschnitts eines achten Ausführungsbeispiels des erfindungsgemäßen lichttechnischen Moduls 100, welches sich von dem siebten Ausführungsbeispiel dadurch unterscheidet, dass die Koppelarme 4 nicht die Blattabschnitte 11 der Mikroblattelemente 1 miteinander verbinden, sondern die Verbindung im Bereich zwischen den Torsionsabschnitten 14 und den Scharnierabschnitten 13 gebildet ist. Im Vergleich zum siebten Ausführungsbeispiel wird dadurch die Kopplungsstärke zwischen den beiden Mikroblattelementen 1 hinsichtlich der Torsion verringert, da die beiden Torsionsabschnitte 14 im Wesentlichen unabhängig voneinander tordierbar sind, sodass auch die Blattabschnitte 11 voneinander unabhängig verkippbar sind. Beispielhaft zeigt Fig. 9b Stellungen der Mikroblattelemente 1, bei denen die Blattabschnitte 11 jeweils in dieselbe Richtung aus der Schwenkebene X herausgekippt sind. Dazu werden simultan elektrische Spannungen an beide Elektrodensegmente 32 angelegt. Fig. 9c und Fig. 9d zeigen zwei unterschiedlich gekippte Stellungen des Blattabschnitts 11 des rechten Mikroblattelements 1, wobei die Stellung des Blattabschnitts 11 des linken Mikroblattelements 1 dabei im Wesentlichen unverändert bleibt.

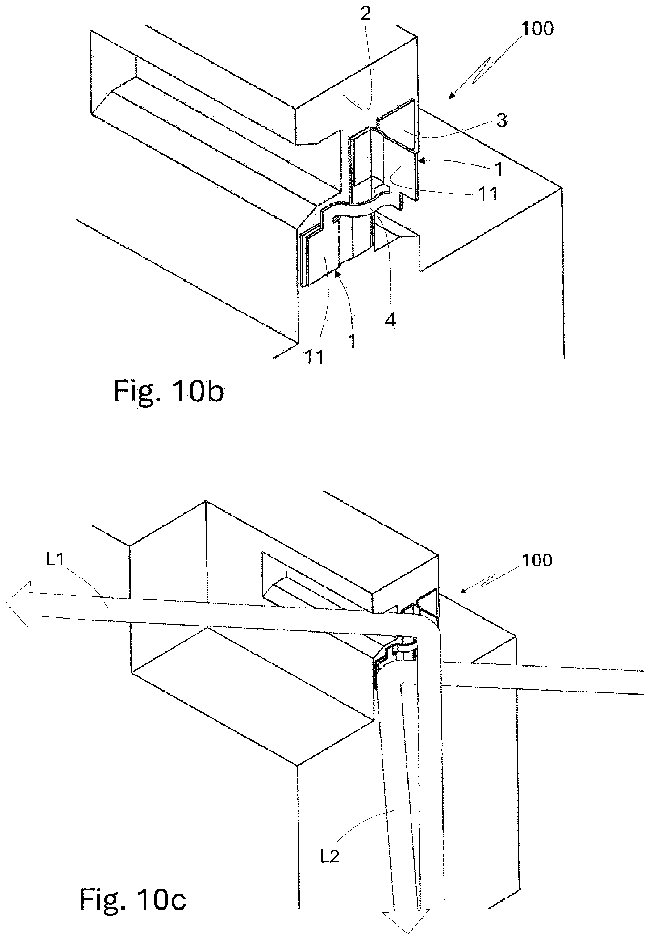

Fig. 10a zeigt einen Teil eines erfindungsgemäßen Lidar-Sensors 1000 und Fig. 10b sowie Fig. 10c zeigen zugehörige Detailansichten. Der Lidar-Sensor 1000 umfasst ein erfindungsgemäßes lichttechnisches Modul 100 mit zwei miteinander mechanisch verbundenen Mikroblattelementen 1, deren Blattabschnitte 11 verspiegelte Oberflächen aufweisen, derart, dass die Mikroblattelemente 1 Mikrospiegel bilden. Jedem Mikroblattelement 1 ist eine Laserlichtquelle 201, 202 zugeordnet, derart, dass der jeweilige Blattabschnitt 11 mittels der zugeordneten Laserlichtquelle 201, 202 beleuchtbar ist, sodass die Laserlichtstrahlen L1, L2 in Abhängigkeit von der Stellung der Blattabschnitte 11 zielgerichtet in die Betriebsumgebung des Lidar-Sensors 1000 reflektiert werden. Der Lidar-Sensor 1000 umfasst weiterhin wenigstens folgende, in den Figuren nicht dargestellte Komponenten: wenigstens eine Detektions- und Auswerteeinrichtung für in der Betriebsumgebung des Lidar-Sensors 1000 reflektiertes Laserlicht, und eine Steuereinrichtung zur Steuerung des lichttechnischen Moduls 100 und der Laserlichtquellen 201, 202.

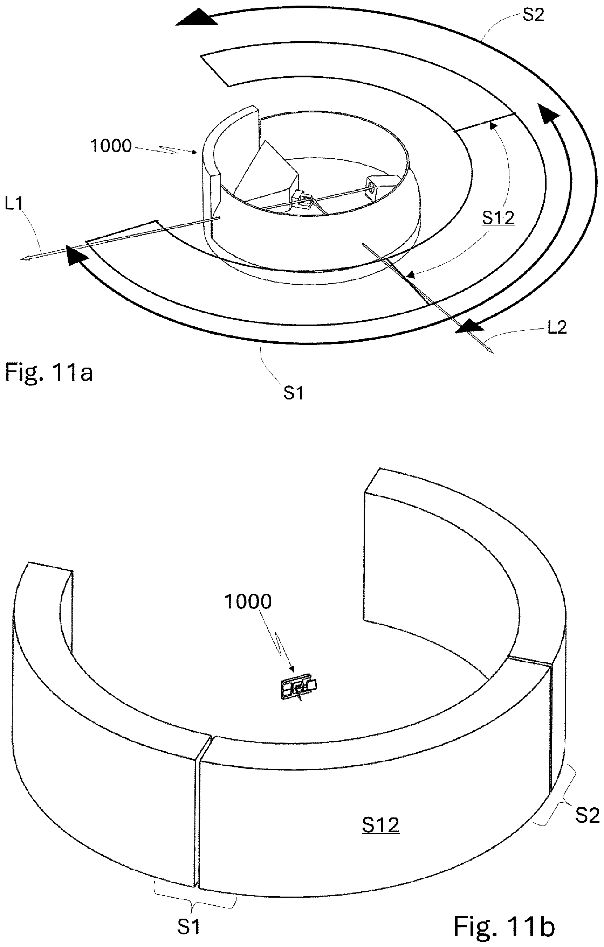

Die Blattabschnitte 11 der beiden Mikroblattelemente 1 weisen zwischen der geschlossenen Stellung und der maximal ausgelenkten Stellung jeweils ein Schwenkwinkelintervall von 90° auf, wobei die Mikroblattelemente 1 zueinander gegensinnig orientiert sind und mittels des Koppelarms 4 miteinander mechanisch verbunden sind. Das Scannen der Betriebsumgebung mittels Verschwenkens der Blattabschnitte 11 erfolgt aufgrund deren mechanischer Kopplung gleichmäßig und mit hoher Zeitauflösung. Die Laserlichtquellen 201, 202 sind zueinander um 90° gedreht orientiert, und bei geschlossener Stellung bzw. maximal ausgelenkter Stellung der Blattabschnitte 11 beträgt der Einfallswinkel der Laserlichtstrahlen L1, L2 auf die spiegelnden Oberflächen der zugeordneten Blattabschnitte 11 jeweils 45°. Wie in der Fig. 11 a dargestellt, ist in dieser Konfiguration insgesamt ein ebenes Scanwinkelintervall von 270° adressierbar. Dieses setzt sich zusammen aus den je Mikroblattelement 1 adressierbaren Scanwinkelintervallen S1, S2 von jeweils 180°, wobei diese einen Winkelversatz von 90° aufweisen, sodass ein überlappendes Scanwinkelintervall S12 von 90° gebildet ist, welches von beiden Mikroblattelementen 1 überstrichen wird. Die vorgenannten Werte der Winkelintervalle sind beispielhaft, und im Rahmen der Erfindung sind Lidar-Sensoren mit kleineren oder größeren Winkelintervallen umfasst. Als Begrenzung ist im Wesentlichen das jeweilige Schwenkwinkelintervall der Blattabschnitte der Mikroblattelemente zwischen der geschlossenen und der maximal ausgelenkten Stellung zu beachten, für welches Werte von bis zu 110° praktisch realisiert werden konnten. Die Anordnung und Orientierung der Laserlichtquellen ist zweckmäßig an die Schwenkwinkelintervalle der Blattabschnitte anzupassen.

Fig. 11 b zeigt die adressierbaren Scanwinkelintervalle S1, S2, S12 einer weiteren Ausführungsform eines erfindungsgemäßen Lidar-Sensors 1000, dessen Mikroblattelemente 1 zusätzlich tordierbar sind, sodass neben dem horizontalen Verschwenken zusätzlich ein vertikales Verkippen der Blattabschnitte 11 durchführbar ist. Dadurch wird das von dem Lidar-Sensor 1000 überwachbare Raumwinkelintervall wie dargestellt erweitert.

### Bezugszeichenliste:

- 100: lichttechnisches Modul
- 1: Mikroblattelement
- 11: Blattabschnitt
- 12: Befestigungsabschnitt
- 13: Scharnierabschnitt
- 14: Torsionsabschnitt
- 2: Grundkörper
- 3: Elektrode
- 31, 32: Elektrodensegment
- 4, 4', 4": Koppelarm
- 4a: Endabschnitt
- 4b: Mittenabschnitt
- 201, 202: Laserlichtquelle
- 1000: Lidar-Sensor

- L1, L2: Laserlichtstrahl
- S1, S2, S12: Scanwinkelintervall
- W: Öffnungswinkel
- X: Schwenkebene
- Z: Schwenkachse

## Patentansprüche

1. Lichttechnisches Modul (100), insbesondere Mikrospiegel-Modul, umfassend wenigstens zwei Mikroblattelemente (1), insbesondere Mikrospiegel, auf einem Grundkörper (2), wobei jedes Mikroblattelement (1) wenigstens die folgenden Abschnitte aufweist:
- einen Blattabschnitt (11) mit zwei im Wesentlichen planparallelen Oberflächen, wobei insbesondere wenigstens eine Oberfläche verspiegelt ist,
- einen randseitigen Befestigungsabschnitt (12), der starr auf dem Grundkörper (2) angeordnet ist, und
- einen dazwischenliegenden Scharnierabschnitt (13), der eigenspannungsinduziert krümmbar ausgebildet ist, derart, dass der Blattabschnitt (11) in ausgelenkte Stellungen schwenkbar ist,
wobei jedes Mikroblattelement (1) eine Elektrode aufweist oder bildet, und wobei jedem Mikroblattelement (1) wenigstens eine auf dem Grundkörper (2) angeordnete Elektrode (3) zugeordnet ist, derart, dass durch Anlegen einer elektrischen Spannung zwischen den einander zugeordneten Elektroden (1, 3) der Blattabschnitt (11) des zugehörigen Mikroblattelements (1) ausgehend von einer ausgelenkten Stellung in Richtung einer geschlossenen Stellung schwenkbar ist, in welcher der Blattabschnitt (11) im Wesentlichen planparallel zum Grundkörper (2) orientiert ist,
**dadurch gekennzeichnet,**
**dass** wenigstens je zwei Mikroblattelemente (1) miteinander mechanisch verbunden sind, derart, dass deren Blattabschnitte (11) miteinander gekoppelt schwenkbar sind.

2. Lichttechnisches Modul (100) nach Anspruch 1,
**dadurch gekennzeichnet,**
**dass** die miteinander mechanisch verbundenen Mikroblattelemente (1) zueinander gegensinnig orientiert sind, derart, dass beim Schwenken des einen Blattabschnitts (11) in Richtung der geschlossenen Stellung ein Schwenken des gekoppelten Blattabschnitts (11) in eine weiter ausgelenkte Stellung erfolgt.

3. Lichttechnisches Modul (100) nach Anspruch 1 oder 2,
**dadurch gekennzeichnet,**
**dass** die Blattabschnitte (11) der miteinander mechanisch verbundenen Mikroblattelemente (1) miteinander einen Öffnungswinkel (W) im Bereich von 30° bis 150°, insbesondere von 80° bis 100°, einschließen.

4. Lichttechnisches Modul (100) nach einem der vorgenannten Ansprüche,
**dadurch gekennzeichnet,**
**dass** die Blattabschnitte (11) der miteinander mechanisch verbundenen Mikroblattelemente (1) zwischen der geschlossenen Stellung und einer maximal ausgelenkten Stellung jeweils ein Schwenkwinkelintervall im Bereich von 30° bis 120°, insbesondere von 80° bis 100°, aufweisen.

5. Lichttechnisches Modul (100) nach einem der vorgenannten Ansprüche,
**dadurch gekennzeichnet,**
**dass** die miteinander mechanisch verbundenen Mikroblattelemente (1) paarweise gegenüberliegend oder entlang ihrer Schwenkachsen (Z) seitlich versetzt zueinander angeordnet sind.

6. Lichttechnisches Modul (100) nach einem der vorgenannten Ansprüche,
**dadurch gekennzeichnet,**
**dass** eine mechanische Verbindung zwischen zwei Mikroblattelementen (1) mittels wenigstens eines Koppelarms (4) gebildet ist, vorzugsweise mittels eines Koppelarms (4), der mittig zwischen den beiden Mikroblattelementen (1) angeordnet ist.

7. Lichttechnisches Modul (100) nach Anspruch 6,
**dadurch gekennzeichnet,**
**dass** das die mechanische Verbindung zwischen zwei Mikroblattelementen (1) mittels zwei gleichartigen Koppelarmen (4) gebildet ist, die spiegelsymmetrisch zu einer gemeinsamen Schwenkebene (X) der beiden Mikroblattelemente (1) angeordnet sind.

8. Lichttechnisches Modul (100) nach Anspruch 6,
**dadurch gekennzeichnet,**
**dass** das die mechanische Verbindung zwischen zwei Mikroblattelementen (1) mittels zwei unterschiedlich ausgebildeten Koppelarmen (4', 4") gebildet ist, wobei die Koppelarme (4', 4") insbesondere voneinander verschiedene Breiten aufweisen.

9. Lichttechnisches Modul (100) nach einem der Ansprüche 6 bis 8,
**dadurch gekennzeichnet,**
**dass** der wenigstens eine Koppelarm (4) zwei Endabschnitte (4a) und einen dazwischenliegenden Mittenabschnitt (4b) aufweist, wobei die Endabschnitte (4a) endseitig mit den zugehörigen Mikroblattelementen (1) verbunden sind, und wobei der Mittenabschnitt (4b) einen Eigenspannungsgradienten aufweist, derart, dass eine dem Grundkörper (2) zugewandte Unterseite zugverspannt ist, wobei eine vom Grundkörper (2) abgewandte Oberseite wenigstens abschnittsweise druckverspannt ist.

10. Lichttechnisches Modul (100) nach Anspruch 9,
**dadurch gekennzeichnet,**
**dass** der wenigstens eine Koppelarm (4) einen Schichtaufbau aufweist, wobei die Oberseite des Mittenabschnitts (4b) wenigstens abschnittsweise durch eine druckverspannte Schicht gebildet ist.

11. Lichttechnisches Modul (100) nach einem der vorgenannten Ansprüche,
**dadurch gekennzeichnet,**
**dass** die auf dem Grundkörper (2) angeordneten Elektroden (3) jeweils zwei voneinander elektrisch isolierte und individuell ansteuerbare Elektrodensegmente (31, 32) aufweisen, wobei die Elektrodensegmente (31, 32) spiegelsymmetrisch zu einer Schwenkebene (X) des jeweils zugeordneten Mikroblattelements (1) angeordnet sind, derart, dass durch Anlegen einer elektrischen Spannung zwischen einem Elektrodensegment (31, 32) und der Elektrode des zugeordneten Mikroblattelements (1) das Mikroblattelement (1) tordierbar ist.

12. Lidar-Sensor (1000) wenigstens umfassend:
- ein lichttechnisches Modul (100) nach einem der vorgenannten Ansprüche, wobei das lichttechnische Modul (100) wenigstens zwei miteinander mechanisch verbundene Mikroblattelemente (1) umfasst, deren Blattabschnitte (11) verspiegelte Oberflächen aufweisen, derart, dass die Mikroblattelemente (1) Mikrospiegel bilden,
- wenigstens zwei Laserlichtquellen (201, 202), wobei jedem Mikroblattelement (1) eine Laserlichtquelle (201, 202) zugeordnet ist, derart, dass der jeweilige Blattabschnitt (11) mittels der zugeordneten Laserlichtquelle (201, 202) beleuchtbar ist,
- wenigstens eine Detektions- und Auswerteeinrichtung für in der Betriebsumgebung des Lidar-Sensors (1000) reflektiertes Laserlicht, und
- eine Steuereinrichtung zur Steuerung des lichttechnischen Moduls (100) und der Laserlichtquellen (201, 202).

13. Lidar-Sensor (1000) nach Anspruch 12,
**dadurch gekennzeichnet,**
**dass** die Blattabschnitte (11) der miteinander mechanisch verbundenen Mikroblattelemente (1) miteinander einen Öffnungswinkel (W) von 90° einschließen und zwischen der geschlossenen Stellung und einer maximal ausgelenkten Stellung jeweils ein Schwenkwinkelintervall von 90° aufweisen, wobei die jeweils miteinander mechanisch verbundenen Mikroblattelemente (1) zueinander gegensinnig orientiert sind, sodass mittels jedes Paares miteinander mechanisch verbundener Mikroblattelemente (1) ein ebenes Scanwinkelintervallvon 270° adressierbar ist.

14. Lidar-Sensor (1000) nach Anspruch 12 oder 13,
**dadurch gekennzeichnet,**
**dass** das lichttechnische Modul (100) mehrere Paare von miteinander mechanisch verbundenen Mikroblattelementen (1) und eine der Anzahl an Mikroblattelementen (1) entsprechende Anzahl an Laserlichtquellen (201, 202) umfasst.
